# EUROPÄISCHE PATENTSCHRIFT

(11) **EP 0 923 303 B1**
(45) Veröffentlichungstag und Bekanntmachung des Hinweises auf die Patenterteilung: **07.11.2001**
(21) Anmeldenummer: 97923930.8
(22) Anmeldetag: 17.05.1997
(51) Int. Cl.: A23C 20/02, A23C 11/10

(54) **VERFAHREN ZUR HERSTELLUNG VON KÄSE-, QUARK- UND JOGHURTPRODUKTEN AUS SOJABOHNEN**
PROCESS FOR PRODUCING CHEESE, CURD AND YOGHOURT PRODUCTS FROM SOYA BEANS
PROCEDE POUR PRODUIRE DU FROMAGE, DU FROMAGE BLANC OU DES YAOURTS A PARTIR DE SOJA

(30) Priorität: 18.05.1996 DE 19620101
(43) Veröffentlichungstag der Anmeldung: 23.06.1999
(73) Patentinhaber: Hansen, Wilhelm, 25421 Pinneberg (DE)
(72) Erfinder: Hansen, Wilhelm, 25421 Pinneberg (DE)
(74) Vertreter: Heun, Thomas
(86) Internationale Anmeldenummer: EP9702535
(87) Internationale Veröffentlichungsnummer: WO9743906

(56) Entgegenhaltungen:
- EP-A- 0 500 132
- DE-A- 2 406 600
- DE-A- 3 730 384
- FR-A- 2 629 310
- GB-A- 874 537
- GB-A- 1 356 363
- GB-A- 1 383 148
- GB-A- 1 383 149
- GB-A- 1 518 952
- INDIAN JOURNAL OF MICROBIOLOGY, Bd. 15, Nr. 1, 1975, Seiten 18-26, XP002040240 S. KOTHARI: "Studies on fermented milk products III. Activity of cheese and yoghurt cultures in soymilk and fortified soymilk."

## Beschreibung

Die Erfindung betrifft Verfahren zur Herstellung von Käse-, Quark- und Joghurtprodukten aus Sojabohnen oder aus den Bohnen anderer Schmetterlingsblütler.

Sojaprodukte sind in verschiedenen Formen allgemein bekannt und verbreitet. Das aus der Sojabohne gewonnene, rein pflanzliche Eiweiß ist besonders gut verträglich und gilt als vollwertiger Ersatz für tierisches Eiweiß. Ferner enthalten Sojaprodukte zum Beispiel kein Cholesterin und keine tierischen Fette. Diese Stoffe können die Gesundheit nachteilig beeinflussen. Darüberhinaus haben Sojaprodukte eine besondere Bedeutung für Personen, die eine Allergie gegen Tiermilcheiweiß haben oder die kein Cholesterin und keine Lactose vertragen oder Diabetiker sind. Auch bei Magen- und Darmerkrankungen ist Sojaeiweiß häufig wesentlich besser verträglich als Tiermilcheiweiß.

Schließlich wächst auch ständig die Gruppe derjenigen Personen. die sich aus verschiedenen Gründen ausschließlich vegetarisch ernähren oder ernähren müssen.

Sojaeiweiß kann prinzipiell in jedem Lebensmittel tierisches Eiweiß ersetzen. Der Nachteil von mit Sojaeiweiß hergestellten Lebensmitteln besteht nur darin, daß diese stets den typischen Geschmack der Sojabohne haben, der insbesondere nach häufigem Verzehr solcher Lebensmittel als mehr oder weniger störend empfunden wird.

Aus der DE-OS 37 30 384 ist zwar ein Verfahren zur Herstellung eines Produktes aus Sojamilch bekannt, das einem Camembertkäse ähnlich ist. Mit diesem bekannten Verfahren ist es aber nicht möglich, den typischen Beigeschmack der Sojabohne vollständig zu beseitigen.

Aus der DE-A-2 406 600 ist ein Verfahren zur Herstellung eines milchproduktfreien Joghurt-Produktes aus Sojabohnenmehl bekannt, mit dem der typische Sojabohnengeschmack weitgehend vermieden werden soll. Dazu wird das Sojabohnenmehl sowie der daraus entstandene Kuchen ausgelaugt, das Sojamilchfiltrat gesäuert und nach Zugabe von Zucker homogenisiert, sterilisiert und mit einer Milchsäurekultur angeimpft. Die fermentierte Sojamilch wird schließlich inkubiert.

Die GB-A-1 383 149 betrifft einen Sojakäse und ein Verfahren zu seiner Herstellung, wobei der Geschmack weitgehend dem des natürlichen Käses ähneln soll, ohne daß Milch- bzw. Molkereiprodukte verwendet werden. Bei diesem Verfahren wird eine Mischung aus Sojamilch und einer Fettzusammensetzung unter Verwendung einer Milchsäure bildenden Käse-Starterkultur fermentiert, wobei die fermentierte Mischung anschließend zur Umwandlung in Quark koaguliert wird, um schließlich zu Sojakäse verarbeitet zu werden. Wesentlich bei diesem Verfahren sind die Bestandteile der Fettzusammensetzung, die eine Mischung aus mindestens einem natürlichen Fett mit Ausnahme von Milchfett mit mindestens einer Verbindung darstellt, die eine niedrige Alkanoylgruppe mit höchstens 12 Kohlenstoffatomen enthält, und wobei die Mischung ferner eine oder mehrere Verbindungen mit Alkanoylgruppen enthält, die von C₄- und/oder C₆-Fettsäuren abgeleitet sind und ein bestimmtes Gewichtsverhältnis haben. Ein Zusatz verschiedener Fettsäuren und unterschiedlicher Alkanoylgruppen wird jedoch als aufwendig und somit als nachteilig angesehen.

Der Erfindung liegt deshalb die Aufgabe zugrunde, ein - demgegenüber wesentlich einfacheres - Verfahren zur Herstellung von Käse-, Quark- und Joghurtprodukten aus Sojabohnen zu schaffen, durch das der für die Sojabohnen typische Beigeschmack beseitigt wird.

Gelöst wird diese Aufgabe mit einem Verfahren der eingangs genannten Art, das gekennzeichnet ist durch die Verfahrensschritte gemäß Anspruch 1.

Das Verfahren ist auch zur Herstellung von Käse-, Quark- und Joghurtprodukten aus den Bohnen anderer Schmetterlingsblütler geeignet, auch wenn es für Sojabohnen sicherlich die größte Bedeutung hat.

Mit diesem Verfahren ist es erstmals möglich geworden, verschiedene Käsesorten wie Frischkäse, Weichkäse und Schnittkäse auf rein pflanzlicher Basis herzustellen, die im Hinblick auf ihren Geschmack, ihren Geruch, ihr Aussehen und ihre Konsistenz von den entsprechenden, aus Kuhmilch hergestellten Käsesorten kaum oder gar nicht unterscheidbar sind und diese Käsesorten zum Teil sogar übertreffen.

Ein weiterer Vorteil des Verfahrens besteht darin, daß es nicht nur zur Herstellung verschiedener Käsesorten, sondern auch zur Herstellung von Quark- und Joghurtprodukten geeignet ist, wenn die abschließende Reifung und Endverarbeitung in der für diese Produkte üblichen Weise durchgeführt wird.

Besonders vorteilhaft ist ferner, daß das hergestellte Endprodukt nicht nur frei von tierischen Bestandteilen ist und somit kein tierisches Eiweiß, kein tierisches Fett, kein Cholesterin und keine Lactose (Milchzucker) aufweist, sondern auch kein Kochsalz und keinen Kristallzucker enthält.

Durch die Zugabe sehr geringer Mengen Tiermilchzucker (insbesondere Zucker von Kuhmilch), der vollständig zu Milchsäure vergoren wird, werden die Milchsäurebakterien in der Milchzucker-Entwöhnungsphase dazu stimuliert, den reichlich angebotenen Pflanzenzucker zu vergären. Dadurch wird der Weg für den Abbau des Pflanzeneiweißes durch die nachfolgend noch genannte, arttypische Schimmel- und Hefen-Schimmelpilzsymbiose frei. Im weiteren Verlauf erzeugen die Enzyme der genannten Spezies durch Fettspaltung den für die entsprechende Art typischen Käsegeschmack.

Durch die Zugabe von Pflanzenfetten und Pflanzenölen kann der Fettgehalt des Endproduktes den Erfordernissen und Wünschen des Endverbrauchers angepaßt werden. Gleiches gilt auch für die Auswahl der Fettqualität.

Die Unteransprüche haben vorteilhafte Weiterbildungen des Verfahrens zum Inhalt.

Quark- und Frischkäseprodukte werden insbesondere gemäß Anspruch 6 hergestellt. Das Verfahren gemäß Anspruch 7 ist insbesondere zur Herstellung von Weichkäse geeignet, während das Verfahren gemäß Anspruch 13 vorzugsweise zur Herstellung von Schnittkäse angewendet wird.

Im folgenden sollen beispielhaft drei besonders bevorzugte und vorteilhafte Verfahren beschrieben werden:

Bei allen drei Beispielen wird aus den Sojabohnen zunächst in üblicher Weise Sojamilch gewönnen. Vorzugsweise werden zu diesem Zweck die Sojabohnen mit oder ohne Schale etwa 12 bis 14 Stunden in kaltem Wasser gequollen, wobei der Anteil des Wassers etwa fünfmal größer ist, als der Anteil der Sojabohnen und das Wasser nach dem Quellen entfernt wird.

Anschließend werden die Bohnen mit einem etwa sechsmal größeren Anteil heißen Wasser in einer Kolloidmühle zu Püree vermahlen. Danach werden die Faserstoffe (= Okara) mit einer Siebtrommel oder mit einem Dekanter oder mit einer Zentrifuge abgetrennt.

Die abfließende Sojamilch hat einen Feststoffanteil von etwa 5 bis 15 % (üblicherweise 12 %) und wird nun einem bekannten Erhitzungsverfahren wie zum Beispiel einer Pasteurisierung oder einer Ultrahocherhitzung unterzogen.

Vor oder nach dem Erhitzen werden der Sojamilch durch Vakuumentgasung ein wesentlicher Teil unerwünschter Geruchs- und Geschmacksstoffe (Purine) entzogen.

Die auf diese Weise vorbereitete Sojamilch ist das Ausgangsprodukt für die weitere erfindungsgemäße Verarbeitung zu Käse-, Quark- oder Joghurtprodukten gemäß nachfolgender Beispiele.

### Beispiel 1:

1.1.) Zur Herstellung eines Frischkäses oder eines anderen quarkähnlichen Produktes wird die Sojamilch auf einen Feststoffgehalt von etwa 12 Gewichts % eingestellt.
1.2.) Anschließend wird der Sojamilch Dextrose oder Glucose mit einem Anteil von 1 bis 5 Gewichts %, vorzugsweise 2 Gewichts %, zugegeben. Ferner kann etwa 0.1 Gewichts % pflanzlicher Farbstoff zugegeben werden.
1.3.) Die Sojamilch wird nun auf 70 bis 90°C. vorzugsweise 85°C, erwärmt.
1.4.) Anschließend werden Pflanzenfette und Pflanzenöle mit einem hohem Anteil ungesättigter Fettsäuren zugegeben und in die Sojamilch emulgiert, wobei die Pflanzenfette und Pflanzenöle vorzugsweise jeweils gleiche Mengen aufweisen und ihr Gesamtanteil etwa 15 Gewichts % beträgt.
1.5.) Diese Sojamilch wird nun mit einem Kulturencocktail in Form einer Sojamilch-Suspension von 1 bis 4 Gewichts %, vorzugsweise 2 Gewichts %, versetzt, die wie folgt zubereitet wird:
1.6a.) Sojamilch wird bei 45 bis 35°C, vorzugsweise 38°C, mit handelsüblichen Käsekulturen für Frischkäse wie "Probat" der Reihe M und/oder einer thermophilen Kultur wie Joghurt der Reihe V versetzt, die beide von der Firma Wiesby in Niebüll erhältlich sind und in dem "Wiesby-Produkthandbuch" (1996) beschrieben sind. Ferner wird Zucker von Kuhmilch zugegeben, dessen Anteil etwa 10 Gewichts % der in Schritt 1.2.) zugegebenen Dextrose oder Glucose beträgt.
1.6b.) Die auf diese Weise beimpfte Sojamilch wird bei etwa 38°C auf einen pH-Wert von 3,8 bis 4,5, vorzugsweise 4,1, gesäuert und bildet den oben genannten Kulturencocktail (= Sojamilch-Suspension).
1.7.) Gemäß Schritt 1.5.) wird die Sojamilch bei etwa 38°C mit dem Kulturencocktail auf einen pH-Wert von 4,1 bis 4,8, vorzugsweise 4,5, gesäuert. Ferner werden bis zu 30 Gewichts % Wasser abgetrennt und entfernt. Anschließend erfolgt in üblicher Weise, zum Beispiel durch Würzen, Reifen. Erhitzen und Verpacken, die abschließende Verarbeitung zu dem gewünschten Endprodukt. Der eingangs genannte Frischkäse kann durch folgende Schritte fertiggestellt werden:
1.8.) Das Sojaeiweiß wird mit etwa 0,5 Gewichts % Meersalz und zur Geschmacksveredelung mit den bei Frischkäse üblichen Ingredienzen wie Schnittlauch, Petersilie, Pfeffer. Zwiebeln oder Fruchtzubereitungen versetzt, deren Anteile bei getrockneten Ingredienzen etwa 0,1 Gewichts % und bei wasserhaltigen Ingredienzen etwa 10 Gewichts % betragen.
1.9.) Das Produkt wird nun durch eine Quarkmühle gepumpt, um seine Cremigkeit zu verbessern, und zur Haltbarmachung über eine Thermisierungsstrecke geleitet, in der es für etwa 1 bis 5 Sekunden mit etwa 62°C hitzbelastet wird. Anschließend wird es maschinell in entsprechende Behälter abgepackt und bis zum Endverbraucher in einer Kühlkette von 4 bis 6°C gehalten.

Dieses Produkt hat im Hinblick auf sein Aussehen, seine Konsistenz, seinen Geruch und Geschmack keine wesentlichen Unterschiede zu einem gleichartigen Produkt aus Tiermilch.

### Beispiel 2:

2.1.) Zur Herstellung von Weichkäse oder einem anderen, einem Camembert ähnlichen Produkt, dient als Ausgangsmaterial die gleiche Sojamilch wie für Beispiel 1.
2.2.) Diese Sojamilch wird gemäß den Schritten 1.1.) bis 1.4.) in Beispiel 1 behandelt.
2.3.) Anschließend wird dieser Sojamilch bei etwa 85°C ein Koagulationsmittel, und zwar vorzugsweise Nigari (= Magnesiumchlorid) aus Meersalz, mit einem Anteil von 0,1 bis 5 Gewichts %, vorzugsweise 0.15 Gewichts %, untergemischt und durch vorsichtiges Rühren so verteilt, daß während der Koagulation etwa 20 Gewichts % Wasser austreten. Dieses Wasser wird entfernt.
2.4.) Das koagulierte Sojaeiweiß wird nun ein- bis zweimal mit heißem Wasser (etwa 90°C) gewaschen. Dadurch wird erreicht, daß stabile Eiweißkügelchen entstehen, die für eine gute Konsistenz und gutes Aussehen des Endproduktes von großer Bedeutung sind.
2.5.) Zur weiteren Entwässerung bis auf einen Feuchtigkeitsgehalt von etwa 70 Gewichts % sowie zur Formgebung des Endproduktes wird das Sojaeiweiß - vorzugsweise bei etwa 90°C - mit einem in der Käsepraxis üblichen Preß- und Formungssystem behandelt. Der Preßdruck wird in entsprechenden Formen für Brie oder Camembert ausgeübt und in einer Stunde von 0 auf etwa 5 kg/cm² gesteigert. Das Produkt wird dann in der Form gewendet und es wird geprüft, ob die Festigkeit ausreicht. Gegebenenfalls wird das Pressen mit etwa 5 kg/cm² für höchstens 30 Minuten fortgesetzt.
2.6.) Den Käse läßt man nun auf unter 45°C abkühlen.
2.7.) Mit Hohlnadeln wird dem Käse seitlich, oben und unten mit Abständen von bis zu 1 cm ein Kulturencocktail, der gemäß den Schritten unter 2.8.) hergestellt wird, injiziert, und zwar so viel, wie der Käse aufnehmen kann. Dies wird durch Austritt an seiner Oberfläche sichtbar. Der Käse wird dadurch gesäuert und fermentiert.

Alternativ zu den Schritten 2.5.) bis 2.7.) kann man das Sojaeiweiß auch zunächst auf etwa 45°C abgekühlen lassen (Schritt 2.6.)). Anschließend wird dann der Kulturencocktail injiziert (Schritt 2.7.)) und der injizierte Käse nun gepreßt und geformt, wie es in Schritt 2.5.) beschrieben ist.

Der Kulturencocktail wird wie folgt zubereitet:
2.8a.) Sojamilch wird zunächst gemäß Schritt 1.6a.) in Beispiel 1 behandelt.
2.8b.) Dieser Sojamilch werden nun 1 bis 10 Gewichts %. vorzugsweise 5 Gewichts %, handelsübliche Kombucha-Teepilz Kultursymbiose zugegeben.
2.8c.) Die auf diese Weise beimpfte Sojamilch wird durch die gemäß Schritt 2.8a.) zugegebenen Kulturen bei etwa 38°C auf einen pH-Wert von 3.8 bis 4.5, vorzugsweise 4,1, gesäuert.
2.8d.) Jedem Liter dieser Suspension werden dann zusätzlich 1 bis 2 Dosen ("units") Schimmelpilzkulturen zugegeben, und zwar Penicillium candidum und/oder Penicillium camemberti und/oder Geotrichum candidum. Hierbei handelt es sich um handelsübliche Käsereikulturen, die von der unter 1.6a.) genannten Firma erhältlich sind. Zur Verstärkung des für eine Käseart typischen Geschmacks kann dem Kulturencocktail zusätzlich natürliches Käsearoma zugegeben werden.
2.9.) Der injizierte und geformte Käse wird zum Ausgleich des Salzhaushalts nun für etwa 30 Minuten in eine gesättigte Meersalzlake mit einer Temperatur von etwa 15 bis 18°C eingebracht. Der Salzlake werden eine wässrige Lösung von Labkraut sowie die für den gewünschten Käsetyp notwendigen Kulturen von Käsebakterien zugegeben.
2.10.) Die Reifung des Produktes beginnt bei etwa 16 bis 18°C und einer relativen Luftfeuchtigkeit von etwa 70 bis 80 % für eine Verweildauer von etwa 24 Stunden. Anschließend wird die Reifung für 6 bis 8 Tage bei etwa 15 bis 16°C und einer relativen Luftfeuchtigkeit von 90 bis 95 % fortgesetzt. Eine schnellere Reifung kann bei 17 bis 18°C und gleicher Luftfeuchtigkeit durchgeführt werden. Die Reifung kann individuell an die jeweiligen Anforderungen und Qualitäten angepaßt werden.
2.11.) Vor der Verpackung wird das Produkt für 24 bis 48 Stunden auf etwa 8°C abgekühlt.

Dieses Produkt kann im Hinblick auf Aussehen und Geruch einem gleichartigen Produkt aus Tiermilch gleichgestellt werden. Im Hinblick auf die Konsistenz ist es aufgrund seiner Cremigkeit einem Produkt aus Tiermilch sogar überlegen. Nur im Geschmack sind geringfügige Unterschiede festzustellen, die aber nicht nachteilig sind.

Andere käseähnliche Typen wie Roquefort werden gemäß Beispiel 2. hergestellt. wobei die für die Käseart notwendigen Schimmelpilzkulturen verwendet und die Reifungsbedingungen entsprechend angepaßt werden.

Für Rotschmierkäse wie Limburger werden dem Kulturencocktail (Schritte 2.8.)) Bakterienkulturen der Art brevibacterium linens in handelsüblicher Qualität gemäß "Wiesby-Produkthandbuch" (siehe Schritt 1.6a.)) oder ähnliche zugesetzt, die von der unter 1.6a.) genannten Firma erhältlich sind.

### Beispiel 3:

3.1.) Zur Herstellung von Schnittkäse wie zum Beispiel Tilsiter oder Gauda oder einem ähnlichen Produkt dient als Ausgangsmaterial die gleiche Sojamilch wie für Beispiel 1.
3.2.) Diese Sojamilch wird gemäß den Schritten 1.1.) bis 1.4.) in Beispiel 1 behandelt.
3.3.) Der Sojamilch wird dann bei etwa 85°C ein bekanntes Koagulationsmittel, vorzugsweise Nigari (= Magnesiumchlorid), mit einem Anteil von 1 bis 4 Gewichts %, vorzugsweise 2,5 Gewichts %, zugegeben. Das bei der Koagulation austretende Wasser wird entfernt.
3.4.) Das koagulierte Sojaeiweiß wird nun ein- bis zweimal mit heißem Wasser (etwa 90°C) gewaschen. Dadurch wird erreicht, daß stabile Eiweißkügelchen entstehen, die für eine gute Konsistenz und gutes Aussehen des Endproduktes von großer Bedeutung sind.
3.5.) Das entstandene Sojaeiweiß wird dann einem dem Käsetyp entsprechenden, bekannten Formungs- und Preßsystem zugeführt und durch Pressen auf einen Anteil von etwa 65 Gewichts % Wasser entwässert. Zur Restentwässerung dient ein Preßvorgang mit einer Steigerung des Preßdrucks von 0 auf etwa 15 kg/cm² während einer Stunde. Danach wird der Käse ein erstes Mal gewendet. Der Preßvorgang wird über 4 Stunden fortgesetzt, wobei das Produkt in jeder Stunde gewendet wird.
3.6.) Den Käse läßt man nun auf eine Temperatur von etwa 38°C abkühlen.
3.7.) Mit Hohlnadeln wird der Käse nun gemäß Schritt 2.7.) geimpft, wobei der Kulturencocktail gemäß dem Schritt 3.8.) hergestellt wird.
   Alternativ zu den Schritten 3.5.) bis 3.7.) kann man das Sojaeiweiß auch zunächst auf etwa 38°C abgekühlen lassen (Schritt 3.6.)). Anschließend wird dann der Kulturencocktail injiziert (Schritt 3.7.)) und der injizierte Käse nun gepreßt und geformt, wie es in Schritt 3.5.) beschrieben ist.
3.8.) Zum Säuern und Fermentieren des Käses dient ein Kulturencocktail, der gemäß den Schritten 2.8a.) bis 2.8c.) hergestellt wird. Dem Kulturencocktail kann weiterhin der Bakterienstamm brevibacterium linens zugegeben werden.
   Zur Herstellung eines Gauda oder eines ähnlichen Käses werden dem Kulturencocktail ferner Probionsäurebakterien mit einer Dosis gemäß "Wiesby-Produkthandbuch" (siehe Schritt 1.6a.)) zugesetzt.
3.9.) Das Produkt wird zum Ausgleich des Salzhaushalts etwa 12 Stunden in einer gesättigten Meersalzlake mit einer Temperatur von etwa 15°C gelagert, wobei der pH-Wert mit Sojamilchsäure auf etwa 5.2 eingestellt wird.
3.10.) Die abschließende Reifung dauert etwa 4 bis 6 Wochen und erfolgt bei einer Temperatur von 14 bis 16°C und einer relativen Luftfeuchtigkeit von 90 %.

Dieses Produkt ist insbesondere im Hinblick auf seinen Geschmack und sein Aussehen einem entsprechenden Produkt aus Tiermilch gleichwertig. Die Lochung ist etwas geringer ausgeprägt.

## Patentansprüche

1. Verfahren zur Herstellung von Käse-, Quark- oder Joghurtprodukten aus Sojabohnen, mit folgenden Verfahrensschritten:
(a) Zubereitung von Sojamilch aus Sojabohnen;
(b) Zugabe von Pflanzenzucker mit einem Anteil von etwa 1 bis 5 Gewichts % zu der Sojamilch;
(c) Emulgieren von Pflanzenfetten und/oder Pflanzenölen mit einem Gesamtanteil von etwa 15 Gewichts % in die Sojamilch;
(d) Zubereitung einer Kulturencocktail-Suspension mit einem pH-Wert von zwischen etwa 3,8 und etwa 4,5 durch Zugabe von handelsüblichen Käsekulturen sowie von Tiermilchzucker mit einem Anteil von etwa 10 Gewichts % des in Schritt (b) zugegebenen Pflanzenzuckers zu Sojamilch gemäß Schritt (a);
(e) Zugabe des Kulturencocktails zu der Sojamilch gemäß Schritt (c), um diese zu säuern und nach Bedarf zu fermentieren, wobei der Tiermilchzucker vollständig zu Milchsäure vergoren wird, und
(f) abschließende Reifung und Endverarbeitung in bekannter Weise zu einem gewünschten Käse-, Quark- oder Joghurtprodukt.

2. Verfahren nach Anspruch 1,
**dadurch gekennzeichnet, daß** der Sojamilch gemäß Schritt (a) durch Vakuumentgasung nachteilige Geruchs- und Geschmacksstoffe entzogen werden.

3. Verfahren nach Anspruch 1 oder 2,
**dadurch gekennzeichnet, daß** die Sojamilch gemäß Schritt (a) auf einen Feststoffgehalt von 12 Gewichts % eingestellt wird.

4. Verfahren nach einem der vorhergehenden Ansprüche,
**dadurch gekennzeichnet, daß** der Pflanzenzucker gemäß Schritt (b) Dextrose oder Glucose ist.

5. Verfahren nach einem der vorhergehenden Ansprüche,
**dadurch gekennzeichnet, daß** Pflanzenfette und Pflanzenöle mit einem hohen Anteil an ungesättigten Fettsäuren mit einem Gewichtsverhältnis von 1 zu 1 zugegeben werden.

6. Verfahren nach einem der vorhergehenden Ansprüche, insbesondere zur Herstellung von Quark- oder Frischkäseprodukten,
**dadurch gekennzeichnet, daß** gemäß Schritt (e) in Anspruch 1
die Sojamilch bei etwa 38°C mit dem Kulturencocktail gemäß Schritt (d) auf einen pH-Wert von etwa 4,5 gesäuert und anschließend bis zu 30 Gewichts % Wasser abgetrennt und entfernt werden und daß gemäß Schritt (f) in Anspruch 1
etwa 0,5 Gewichts % Meersalz sowie Kräuter- und/oder Fruchtzubereitungen zur Geschmacksveredelung zugesetzt werden.

7. Verfahren nach einem der Ansprüche 1 bis 5, insbesondere zur Herstellung von Weichkäse wie Brie oder Camembert,
**dadurch gekennzeichnet, daß** im Anschluß an Schritt (c) in Anspruch 1
das Sojaeiweiß aus der Sojamilch durch Zugabe eines Koagulationsmittels koaguliert und das dabei austretende Wasser entfernt wird.

8. Verfahren nach Anspruch 7,
**dadurch gekennzeichnet, daß** das Koagulationsmittel Magnesiumchlorid aus Meersalz ist, das bei einer Temperatur der Sojamilch von etwa 85°C mit einem Anteil von etwa 0,15 Gewichts % zugesetzt wird.

9. Verfahren nach Anspruch 7 oder 8,
**dadurch gekennzeichnet, daß** das koagulierte Sojaeiweiß ein- bis zweimal mit Wasser mit einer Temperatur von etwa 90°C gewaschen wird.

10. Verfahren nach einem der Ansprüche 7 bis 9,
**dadurch gekennzeichnet, daß** dem gemäß Schritt (d) in Anspruch 1 zubereiteten Kulturencocktail 1 bis 10 Gewichts % Kombucha-Teepilz Kultursymbiose zugegeben wird.

11. Verfahren nach Anspruch 10,
**dadurch gekennzeichnet, daß** dem Kulturencocktail pro Liter zusätzlich 1 bis 2 Dosen ("units") Schimmelpilzkulturen wie Penicillium candidum und/oder Penicillium camemberti und/oder Geotrichum candidum zugegeben werden.

12. Verfahren nach einem der Ansprüche 7 bis 11,
**dadurch gekennzeichnet, daß**
das koagulierte Sojaeiweiß durch Pressen in entsprechenden Formen bis auf einen Feuchtigkeitsgehalt von etwa 70 Gewichts % entwässert wird und
der Kulturencocktail mittels Hohlnadeln in den Käse injiziert wird. um diesen zu säuern und zu fermentieren.

13. Verfahren nach Anspruch 7, insbesondere zur Herstellung von Schnittkäse,
**dadurch gekennzeichnet, daß**
das Koagulationsmittel Magnesiumchlorid aus Meersalz ist, das bei einer Temperatur der Sojamilch von etwa 85°C mit einem Anteil von etwa 2,5 Gewichts % zugesetzt wird.

14. Verfahren nach Anspruch 13,
**dadurch gekennzeichnet, daß** das koagulierte Sojaeiweiß ein- bis zweimal mit Wasser mit einer Temperatur von etwa 90°C gewaschen wird.

15. Verfahren nach Anspruch 13 oder 14,
**dadurch gekennzeichnet, daß** dem gemäß Schritt (d) in Anspruch 1 zubereiteten Kulturencocktail 1 bis 10 Gewichts % Kombucha-Teepilz Kultursymbiose zugegeben wird.

16. Verfahren nach einem der Ansprüche 13 bis 15,
**dadurch gekennzeichnet, daß** dem Kulturencocktail der Bakterienstamm brevibacterium linens zugegeben wird.

17. Verfahren nach einem der Ansprüche 13 bis 16,
**dadurch gekennzeichnet, daß** dem Kulturencocktail Probionsäurebakterien zugesetzt werden.

18. Verfahren nach einem der Ansprüche 13 bis 17,
**dadurch gekennzeichnet, daß**
das koagulierte Sojaeiweiß durch Pressen in entsprechenden Formen bis auf einen Feuchtigkeitsgehalt von etwa 65 Gewichts % entwässert wird und
der Kulturencocktail mittels Hohlnadeln in den Käse injiziert wird, um diesen zu säuern und zu fermentieren.

19. Verfahren nach einem der vorhergehenden Ansprüche,
**dadurch gekennzeichnet, daß** anstelle von Sojamilch die Milch aus den Bohnen eines anderen Schmetterlingsblütlers gewonnen und verwendet wird.

## Claims

1. Method for the manufacture of cheese, quark or yoghurt products from soybeans, comprising the following process steps:
(a) Preparation of soy milk from soybeans;
(b) Addition of vegetable sugar in a proportion from approximately 1% to 5% by weight to the soy milk;
(c) Emulsification of vegetable fats and/or vegetable oils with a total proportion of approximately 15% by weight into the soy milk;
(d) Preparation of a culture cocktail suspension with a pH of between approximately 3,8 and approximately 4,5 by the addition of commercial cheese cultures and animal lactose in a proportion of approximately 10% by weight of the vegetable sugar added in step (b) to soy milk according to step (a);
(e) Addition of the culture cocktail to the soy milk according to step (c), to acidify the soy milk and to ferment it as required, wherein the animal lactose is completely fermented into lactic acid; and
(f) Final ripening and processing in the manner of the prior art into the desired cheese, quark or yoghurt product.

2. Method according to claim 1,
**characterized in that** undesirable scent or flavor components are removed from the soy milk according to step (a) by vacuum degassing.

3. Method according to claims 1 or 2,
**characterized in that** the soy milk according to step (a) is adjusted to a solids proportion of 12% by weight.

4. Method according to one of the preceding claims,
**characterized in that** the vegetable sugar according to step (b) is dextrose or glucose.

5. Method according to one of the preceding claims,
**characterized in that** vegetable fats and vegetable oils with a high proportion of unsaturated fatty acids are added in a ratio of 1 to 1 by weight.

6. Method according to one of the preceding claims, in particular for the manufacture of quark or cream cheese products,
**characterized in that** according to step (e) in claim 1,
the soy milk at a temperature of approximately 38°C is acidified with the culture cocktail according to step (d) to a pH of approximately 4,5 and then up to 30% by weight of water is separated and removed, and
that according to step (f) in claim 1, approximately 0,5% by weight sea salt and herb and/or fruit preparations are added to improve the taste.

7. Method according to one of claims 1 to 5, in particular for the manufacture of soft cheese such as Brie or Camembert,
**characterized in that**, following step (c) in claim 1,
the soy protein from the soy milk is coagulated by the addition of a coagulant, and the escaping water is removed.

8. Method according to claim 7,
**characterized in that** the coagulant is magnesium chloride from sea salt, which is added to the soy milk in a proportion of approximately 0,15% by weight at a temperature of the soy milk of approximately 85°C.

9. Method according to claim 7 or 8,
**characterized in that** the coagulated soy protein is washed once or twice with water at a temperature of approximately 90°C.

10. Method according to one of claims 7 to 9,
**characterized in that** 1 to 10% by weight of Kombucha tea fungus culture symbiosis is added to the culture cocktail prepared according to step (d) in claim 1.

11. Method according to claim 10,
**characterized in that** 1 to 2 doses (units) of mould fungus cultures such as Penicillium candidum and/or Penicillium camemberti and/or Geotrichum candidum are also added to each litre of the culture cocktail.

12. Method according to one of claims 7 to 11,
**characterized in that**
the coagulated soy protein is dehydrated by pressing in appropriate moulds to a moisture content of approximately 70% by weight, and
the culture cocktail is injected into the cheese by means of hollow needles, to acidify and ferment the cheese.

13. Method according to claim 7, in particular for the manufacture of hard cheese,
**characterized in that** the coagulant is magnesium chloride from sea salt, which is added at a temperature of the soy milk of approximately 85°C in a proportion of approximately 2,5% by weight.

14. Method according to claim 13,
**characterized in that** the coagulated soy protein is washed once or twice with water at a temperature of approximately 90°C.

15. Method according to claims 13 or 14,
**characterized in that** 1 to 10% by weight Kombucha tea fungus culture symbiosis is added to the culture cocktail prepared according to step (d) in claim 1.

16. Method according to one of claims 13 to 15,
**characterized in that** the bacterial strain Brevibacterium linens is added to the culture cocktail.

17. Method according to one of claims 13 to 16,
**characterized in that** probionic acid bacteria are added to the culture cocktail.

18. Method according to one of claims 13 to 17,
**characterized in that** the coagulated soy protein is dehydrated by pressing in appropriate moulds to a moisture content of approximately 65% by weight, and
the culture cocktail is injected into the cheese by means of hollow needles, to acidify and ferment the cheese.

19. Method according to one of the preceding claims,
**characterized in that** instead of soy milk, the milk from beans of other papilionaceae is derived and used.

## Revendications

1. Procédé de fabrication de produits à base de fromage, de fromage blanc ou de yaourt à partir de soja, comprenant les étapes suivantes :
(a) préparation de lait de soja à partir de soja ;
(b) addition au lait de soja de sucre végétal dans une proportion de 1 à 5 % en poids environ ;
(c) émulsion dans le lait de soja de graisses végétales et/ou d'huiles végétales dans une proportion totale de 15 % en poids environ ;
(d) préparation d'une suspension de cocktail de cultures avec une valeur pH comprise entre 3,8 et 4,5 environ par addition au lait de soja selon l'étape (a) de cultures fromagères du commerce ainsi que de lactose animal dans une proportion de 10 % en poids environ du sucre végétal ajouté dans l'étape (b) ;
(e) addition du cocktail de cultures au lait de soja selon l'étape (c) pour acidifier ou, au besoin, fermenter ce dernier, le lactose animal étant complètement fermenté en acide lactique, et
(f) maturation et traitements finaux de façon connue pour obtenir un produit à base de fromage, de fromage blanc ou de yaourt souhaité.

2. Procédé selon la revendication 1, **caractérisé en ce que** l'on retire du lait de soja selon l'étape (a) des substances odorantes ou des aromates préjudiciables par dégazage par le vide.

3. Procédé selon la revendication 1 ou 2, **caractérisé en ce que** le lait de soja selon l'étape (a) est réglé sur une teneur en matières solides de 12 % en poids environ.

4. Procédé selon l'une des revendications précédentes, **caractérisé en ce que** le sucre végétal selon l'étape (b) est du dextrose ou du glucose.

5. Procédé selon l'une des revendications précédentes, **caractérisé en ce que** l'on ajoute des graisses végétales et des huiles végétales présentant une proportion importante d'acides gras non saturés dans un rapport de poids de 1 : 1.

6. Procédé selon l'une des revendications précédentes, notamment de fabrication de produits à base de fromage blanc ou de fromage frais, **caractérisé en ce que** selon l'étape (e) de la revendication 1 on acidifie le lait de soja à 38°C environ avec le cocktail de cultures selon l'étape (d) sur une valeur pH de 4,5 environ, puis on sépare et supprime jusqu'à 30 % en poids d'eau, et **en ce que** selon l'étape (f) de la revendication 1 on ajoute 0,5 % en poids environ de sel marin ainsi que des préparations d'herbes et/ou de fruits pour affiner le goût.

7. Procédé selon l'une des revendications 1 à 5, notamment pour la fabrication de fromage à pâte molle tel que le Brie ou le Camembert, **caractérisé en ce que** suite à l'étape (c) de la revendication 1 on coagule l'albumen de soja du lait de soja par addition d'un agent de coagulation et que l'on supprime l'eau excédentaire.

8. Procédé selon la revendication 7, **caractérisé en ce que** l'agent de coagulation est du chlorure de magnésium de sel de mer que l'on ajoute au lait de soja à une température de 85°C environ dans une proportion de 0,15 % en poids environ.

9. Procédé selon la revendication 7 ou 8, **caractérisé en ce que** l'albumen de soja coagulé est lavé une à deux fois avec de l'eau à une température de 90°C environ.

10. Procédé selon l'une des revendications 7 à 9, **caractérisé en ce que** l'on ajoute au cocktail de cultures préparé selon l'étape (d) de la revendication 1 1 à 10 % en poids d'une symbiose de culture du champignon à thé de Kombucha.

11. Procédé selon la revendication 10, **caractérisé en ce que** l'on ajoute au cocktail de cultures également 1 à 2 doses (« units ») par litre de cultures de moisissures telles que le penicillium candidum et/ou le penicillium camemberti et/ou le geotrichum candidum.

12. Procédé selon l'une des revendications 7 à 11, **caractérisé en ce que** l'on déshydrate l'albumen de soja coagulé par pressage dans des moules appropriés jusqu'à un pourcentage d'humidité de 70 % en poids environ, et que l'on injecte le cocktail de cultures à l'aide d'aiguilles creuses dans le fromage pour l'acidifier et fermenter.

13. Procédé selon la revendication 7, notamment pour la fabrication de fromage de coupe, **caractérisé en ce que** l'agent de coagulation est du chlorure de magnésium de sel marin que l'on ajoute au lait de soja à une température de 85°C environ dans une proportion de 2,5 % en poids environ.

14. Procédé selon la revendication 13, **caractérisé en ce que** l'on lave l'albumen de soja coagulé une à deux fois avec de l'eau à une température de 90°C environ.

15. Procédé selon la revendication 13 ou 14, **caractérisé en ce que** l'on ajoute au cocktail de cultures préparé selon l'étape (d) de la revendication 1 1 à 10 % en poids d'une symbiose de culture du champignon à thé de Kombucha.

16. Procédé selon l'une des revendications 13 à 15, **caractérisé en ce que** l'on ajoute au cocktail de cultures la bactérie brevibacterium linens.

17. Procédé selon l'une des revendications 13 à 16, **caractérisé en ce que** l'on ajoute au cocktail de cultures des bactéries à acide probionique.

18. Procédé selon l'une des revendications 13 à 17, **caractérisé en ce que** l'on déshydrate l'albumen de soja coagulé par pressage dans des moules appropriés jusqu'à un pourcentage d'humidité de 65 % en poids environ, et que l'on injecte le cocktail de cultures à l'aide d'aiguilles creuses dans le fromage pour l'acidifier et le fermenter.

19. Procédé selon l'une des revendications précédentes, **caractérisé en ce qu'**au lieu de lait de soja on extrait et utilise le lait des fruits d'une autre papilionacée.
